# FASCICULE DE BREVET EUROPEEN

(11) **EP 1 672 180 B1**
(45) Date de publication et mention de la délivrance du brevet: **13.02.2008**
(21) Numéro de dépôt: 05292647.4
(22) Date de dépôt: 13.12.2005
(51) Int. Cl.: F01D 17/16

(54) **Etage d'aubes de redresseur actionnées par une couronne rotative déplacée par des moyens moteurs électriques**
Leitschaufelstufe eines Leitapparates die von einen drehbaren Ring angetrieben wird wobei der Ring von Elektromotoren versetzt wird
Nozzle stage of a distributor actuated by a rotatable ring moved by electric motors

(30) Priorité: 16.12.2004 FR 0413389
(43) Date de publication de la demande: 21.06.2006
(73) Titulaire: SNECMA, 75015 Paris (FR)
(72) Inventeur: Bouru, Michel André, 77950 Montereau sur le Jard (FR)
(74) Mandataire: Barbin le Bourhis, Joël

(56) Documents cités:
- EP-A- 0 527 593
- FR-A- 1 246 176
- FR-A- 2 688 827
- US-A- 4 130 375
- US-A1- 2004 208 742

## Description

L'invention se rapporte à une turbomachine dont le stator comporte au moins un étage d'aubes de redresseur à calage variable, agencé dans un carter, lesdites aubes étant déplacées par une couronne d'actionnement rotative, extérieure au carter et portée par lui. Elle concerne plus particulièrement une motorisation électrique de l'entraînement de ladite couronne, pour augmenter la précision et la rapidité de réponse de la commande de positionnement des aubes. L'invention s'applique notamment au domaine des réacteurs d'avions et plus particulièrement à un compresseur que comporte un tel réacteur.

Dans une turbomachine du genre spécifié ci-dessus, un stator de compresseur est équipé d'au moins un étage d'aubes de redresseur, à calage variable, dont l'orientation dans la veine est ajustable. Ainsi, l'angle d'attaque des aubes peut être contrôlé en fonction des conditions de fonctionnement, par un système d'asservissement qui commande le déplacement de ladite couronne.

Par exemple, le brevet américain 4 130 375 décrit une couronne d'actionnement à déplacement simplement circulaire, composée de deux anneaux superposés. L'anneau intérieur est monté sur le carter au moyen de plots s'étendant radialement tandis que l'anneau extérieur, rattaché à des biellettes d'actionnement, roule sur l'anneau intérieur grâce à des galets. Un tel système est lourd et encombrant, toutes choses égales par ailleurs.

De plus, l'entraînement de l'anneau extérieur est assuré par un ou plusieurs vérins. Il en résulte que la précision du positionnement des aubes et la rapidité de manoeuvre peuvent être insuffisants.

Par ailleurs, le document EP 527 593 décrit une structure de moteur électrique linéaire adapté à la manoeuvre d'une couronne d'actionnement. Le système décrit fait appel à des éléments d'induction électrique situés radialement à l'extérieur de ladite couronne d'actionnement. Ces éléments d'induction sont volumineux et difficiles à intégrer dans l'espace disponible à l'extérieur du carter. De plus, la couronne d'actionnement n'est pas centrée de façon satisfaisante, surtout si on considère de possibles variations de diamètre (dues à l'élévation de température) entre la couronne et le carter qui la supporte.

L'invention vise en premier lieu une motorisation électrique de l'entraînement d'une couronne d'actionnement ne présentant pas les inconvénients indiqués ci-dessus.

Plus précisément, l'invention concerne un étage d'aubes de redresseur à calage variable, comportant des aubes agencées dans un carter, lesdites aubes étant déplacées par un système de manoeuvre comprenant une couronne d'actionnement extérieure audit carter et porté par celui-ci et ladite couronne étant liée par des biellettes aux aubes dudit étage pour les actionner simultanément, ladite couronne d'actionnement étant assujettie à se déplacer selon une simple rotation centrée sur l'axe de ladite turbomachine, ledit système de manoeuvre comporte deux parties coaxiales, une partie intérieure solidaire du carter et une partie extérieure comportant ladite couronne d'actionnement, reliée auxdites biellettes et guidée en rotation autour de ladite partie intérieure et en ce qu'au moins une unité motrice électrique est agencée entre ces deux parties.

Selon un mode de réalisation préféré, le système défini ci-dessus est encore caractérisé en ce que ladite partie intérieure comporte un rail annulaire fixe faisant saillie à la surface externe dudit carter, coaxialement à celui-ci et en ce que ladite partie extérieure comporte, outre ladite couronne d'actionnement, au moins trois équipages mobiles espacés circonférentiellement et assujettis à se déplacer le long dudit rail, en ce que chaque équipage mobile est couplé à ladite couronne par un agencement de guidage radial et en ce que ladite unité motrice est agencée entre l'un des équipages mobiles et ladite partie intérieure.

Selon un mode de réalisation possible, ladite unité motrice est un moteur électrique linéaire structurellement partagé entre lesdites parties intérieure et extérieure, notamment entre la surface extérieure du carter et l'un des équipages mobiles au moins.

Selon une autre possibilité, l'unité motrice comporte un moteur électrique pas à pas et des moyens d'engrènement à pignon et crémaillère sont agencés entre l'axe du moteur et l'une des parties, le corps dudit moteur étant porté par l'autre partie.

La structure définie ci-dessus présente un encombrement radial réduit et un faible poids. Dans le mode de réalisation avantageux indiqué ci-dessus, les deux parties extérieure et intérieure sont conçues pour que, d'une part, le centrage de la couronne par rapport à l'axe de la turbomachine soit toujours assuré avec précision quels que soient les effets de la température sur le carter et la couronne d'actionnement et pour que, d'autre part, ces mêmes variations de températures n'affectent pas le couplage entre les éléments de ladite unité motrice respectivement portés par lesdites parties intérieure et extérieure. En effet, si le moteur électrique est un moteur dit linéaire, il est impératif que l'espacement entre stator et rotor reste bien constant, ce qui est bien le cas ici puisque l'un est porté par la paroi extérieure du carter de stator et que l'autre est portée par l'équipage mobile assujetti à se déplacer à la surface du stator suivant une trajectoire rigoureusement imposée par le rail solidaire de ce stator. Cet écartement reste le même quelle que soit la température puisque les variations dimensionnelles entre la couronne d'actionnement et le carter sont absorbées par ledit agencement de guidage radial.

Par ailleurs, si le moteur est du type pas à pas installé sur le carter ou sur l'équipage mobile, il est important que le pignon en prise avec la crémaillère soit toujours à la même distance de celle-ci pour conserver précision et qualité de transmission. C'est bien le cas dans le système proposé, pour les mêmes raisons indiquées ci-dessus.

Selon un mode de réalisation préféré, ladite partie extérieure comporte au moins quatre équipages mobiles sensiblement équidistants circonférentiellement et deux unités motrices semblables sont respectivement agencées entre deux équipages mobiles sensiblement diamétralement opposés d'une part et ladite partie intérieure d'autre part.

L'invention concerne aussi un compresseur muni d'un étage d'aubes de redresseur tel que défini ci-dessus ainsi qu'une turbomachine comportant au moins un tel redresseur.

L'invention sera mieux comprise et d'autres avantages de celle-ci apparaîtront mieux à la lecture de la description qui va suivre, donnée uniquement à titre d'exemple et faite en référence aux dessins annexés dans lesquels :
- la figure 1 est une vue suivant une section du carter, perpendiculairement à l'axe de la turbomachine et montrant le montage de la couronne d'actionnement autour dudit carter ;
- la figure 2 est une vue de détail en coupe et à plus grande échelle d'une partie de la couronne d'actionnement de la figure 1, équipée d'un moteur linéaire ;
- la figure 3 est une vue en perspective d'une partie de la couronne d'actionnement selon une variante, équipée d'un moteur linéaire ;
- la figure 4 est une vue schématique d'un mode de réalisation à moteur pas-à-pas ; et
- la figure 5 est une vue schématique d'un autre mode de réalisation à moteur pas-à-pas.

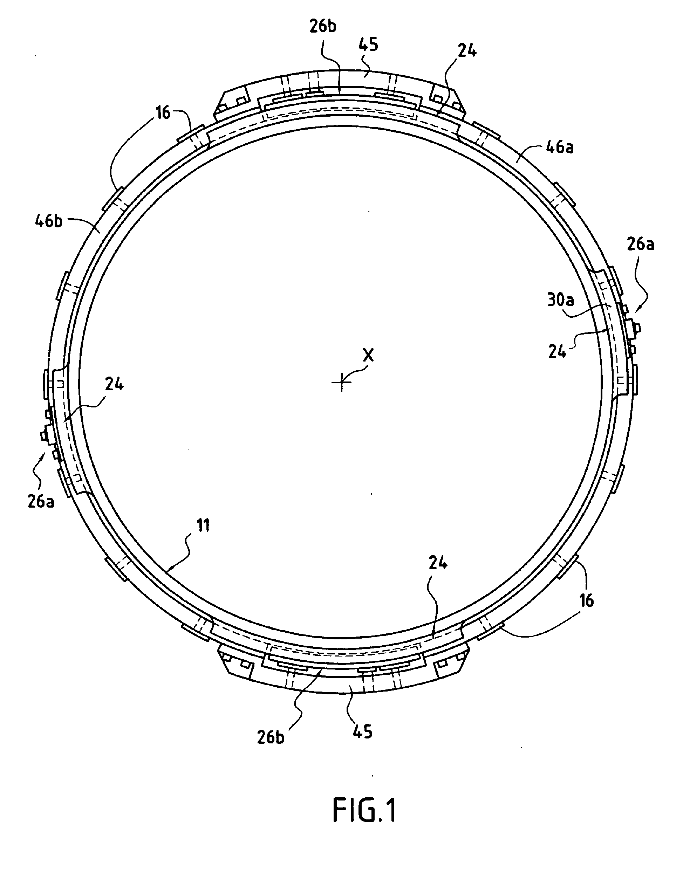

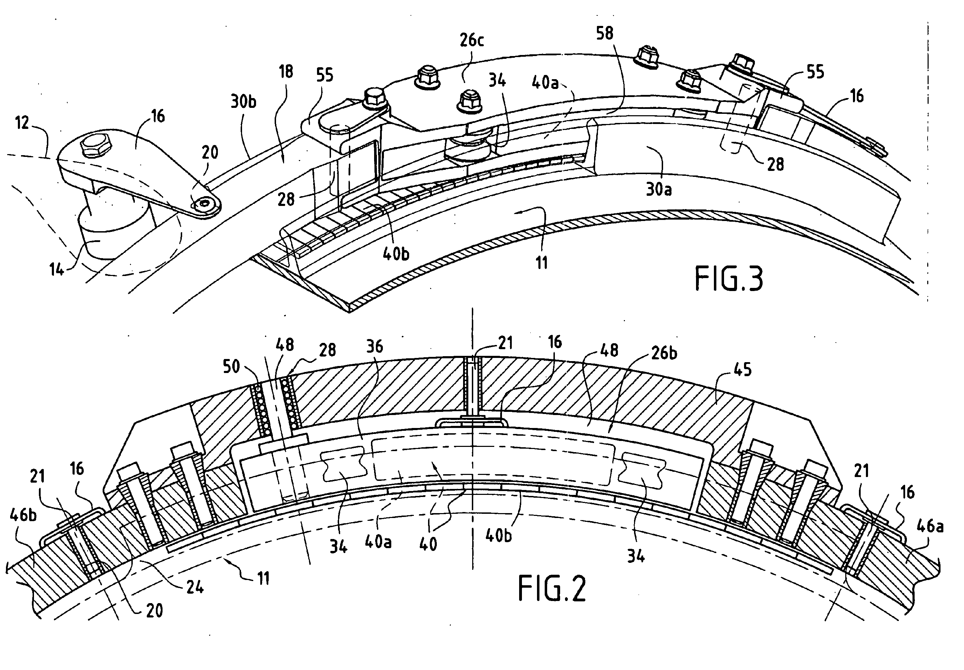

En considérant plus particulièrement les figures 1 à 3, on distingue le carter 11 d'une turbomachine, d'axe X, qui abrite des aubes de redresseur 12 à calage variable dont l'une est visible sur la figure 3. Les aubes ne sont pas représentées sur la figure 1. Chaque aube comporte un pivot 14 faisant saillie du carter, relié par une biellette 16 à une couronne d'actionnement 18 extérieure au carter. Les trous 20 d'orientation radiale pratiqués dans la couronne et dans lesquels sont engagés les tenons 21 solidaires des extrémités des biellettes sont oblongs, puisque le déplacement de ladite couronne est simplement circulaire. On comprend que la rotation de la couronne d'actionnement, circonférentiellement, fait pivoter simultanément les aubes 12 dans le carter, d'un même angle. Ainsi, lorsque l'invention s'applique à un réacteur d'avion, l'orientation des aubes peut être ajustée en fonction des conditions de vol.

Le carter 11 comporte, extérieurement, un rail annulaire coaxial 24 fixe. Le rail est dans l'exemple d'un seul tenant avec la paroi du carter et fait saillie de sa surface extérieure. Il est en fait segmenté ; seuls les tronçons utiles de celui-ci existent. Au moins trois équipages mobiles 26a ou 26b espacés circonférentiellement et de préférence sensiblement équidistants les uns des autres, sont assujettis à se déplacer le long de ce rail. Chaque équipage mobile est couplé à la couronne d'actionnement par un agencement de guidage radial 28 assurant un centrage automatique parfait de la couronne 18 par rapport à l'axe X de la turbomachine. Dans l'exemple, on a prévu quatre équipages mobiles 26a, 26b régulièrement espacés à 90° les uns des autres, chacun portant un agencement de guidage radial 28.

Selon l'exemple présentement décrit, le rail 24 est composé de deux anneaux 30a, 30b parallèles, solidaires du carter et les équipages mobiles 26a, 26b sont conformés pour se déplacer entre ces anneaux. Les deux anneaux 30a, 30b (segmentés) sont pourvus de nervures latérales en vis-à-vis et les équipages mobiles comportent des galets biconiques 34 en engagement roulant avec lesdites nervures latérales. De plus, chaque équipage mobile 26a ou 26b comporte un support 36 entourant ladite couronne. Les galets 34 sont montés en rotation libre sur ce support.

Dans l'exemple, chaque équipage mobile 26 comporte quatre galets biconiques 34 coopérant deux à deux avec les deux nervures des anneaux 30a, 30b, respectivement.

Le système de manoeuvre de l'ensemble des aubes comporte principalement deux parties superposées coaxialement. Dans la présente description, on désigne par "partie intérieure" un ensemble d'éléments solidaires du carter, notamment le rail 24 et par "partie extérieure" un ensemble d'éléments qui peuvent se déplacer par rapport à ladite partie intérieure, notamment ladite couronne d'actionnement 18 et lesdits équipages mobiles 26a, 26b.

Conformément à l'invention, une unité motrice électrique 40 est agencée ou répartie entre les deux parties intérieure et extérieure. Par unité motrice électrique, on entend tout ensemble d'actionnement capable de provoquer un déplacement en consommant une énergie électrique.

Avantageusement, la ou chaque unité motrice est partagée entre un équipage mobile 26b et ladite partie intérieure.

Comme représenté, notamment sur les figures 2 et 3, l'unité motrice 40 est un moteur électrique linéaire, structurellement partagé entre ladite partie intérieure et l'équipage mobile appartenant à ladite partie extérieure.

Ainsi, le moteur linéaire est tel que la distance entre sa partie mobile 40a et sa partie fixe 40b reste invariante quelles que soient, notamment, les variations de diamètre entre la couronne d'actionnement 18 et le carter 11, dues à l'augmentation de température. Le couple fourni par ce moteur reste donc invariable de même que sa précision de déplacement.

Ce moteur linéaire comporte donc un "stator" (partie fixe 40b) porté par le carter 11 et disposé entre les deux anneaux parallèles du rail, sur une certaine longueur de la surface extérieure courbe du carter. Il comporte aussi un "rotor" (partie mobile 40a) porté par l'équipage mobile 26 et se déplaçant en regard de ce stator. Le rotor et le stator ont des rayons de courbure constants et voisins pour que leurs surfaces en regard soient toujours séparée par une faible distance radiale, constante.

Dans le mode de réalisation décrit, où la partie extérieure comporte quatre équipages mobiles sensiblement équidistants circonférentiellement, on a prévu deux unités motrices 40 semblables, respectivement agencées entre deux équipages mobiles 26b sensiblement diamétralement opposées, d'une part et ladite partie intérieure, d'autre part. Les deux équipages mobiles 26b qui portent des éléments de moteur linéaire sont plus longs que les deux autres.

Dans le mode de réalisation des figures 1 et 2, pour chaque unité motrice 40, la couronne d'actionnement 18 comporte un pontet de raccordement 45 en forme de secteur à rayon de courbure augmenté. Le pontet 45 est fixé à deux autres tronçons 46a, 46b de la couronne par des vis radiales. Chaque pontet 45 est conformé pour ménager un espace 48 abritant l'équipage mobile 26b qui porte une partie de l'unité motrice 40 correspondante. L'agencement de guidage radial 28 correspondant à cet équipage mobile qui porte une partie de l'unité motrice est quant à lui monté entre ledit équipage mobile 26b et le pontet de raccordement 45 voisin. Il s'agit ici d'une tige 48 s'étendant radialement, solidaire de l'équipage mobile et engagée dans une douille de roulement 50. Cette dernière s'étend dans un perçage radial du pontet de raccordement 45. La structure peut être inversée (c'est-à-dire que la douille peut être solidaire de l'équipage mobile et la tige peut être solidaire du pontet) sans modification de la fonction de guidage radial.

Les biellettes raccordées 16 à l'anneau sont montées radialement à l'extérieur de celui-ci à l'exception des biellettes raccordées aux pontets 45, lesquelles sont montées radialement à l'intérieur de ceux-ci. Ainsi, toutes les biellettes s'inscrivent sur une même surface cylindrique.

La figure 3 illustre une variante utilisant un moteur linéaire du type précédemment décrit et dans laquelle le corps de l'équipage mobile 26c fait partie intégrante de la couronne d'actionnement 18 et est raccordé à celle-ci par deux agencements de guidage radial 28 précités. Plus précisément, ledit corps comporte une sorte de chape 55 à chaque extrémité dans laquelle se trouve montée une tige radiale coulissant dans un alésage de l'extrémité voisine du tronçon d'anneau. Le corps de l'équipage mobile comporte aussi des cavités allongées 58 abritant les éléments du rotor du moteur linéaire. Dans cette variante, l'encombrement radial de la couronne d'actionnement 18 n'est pas augmenté par l'intégration du moteur linéaire.

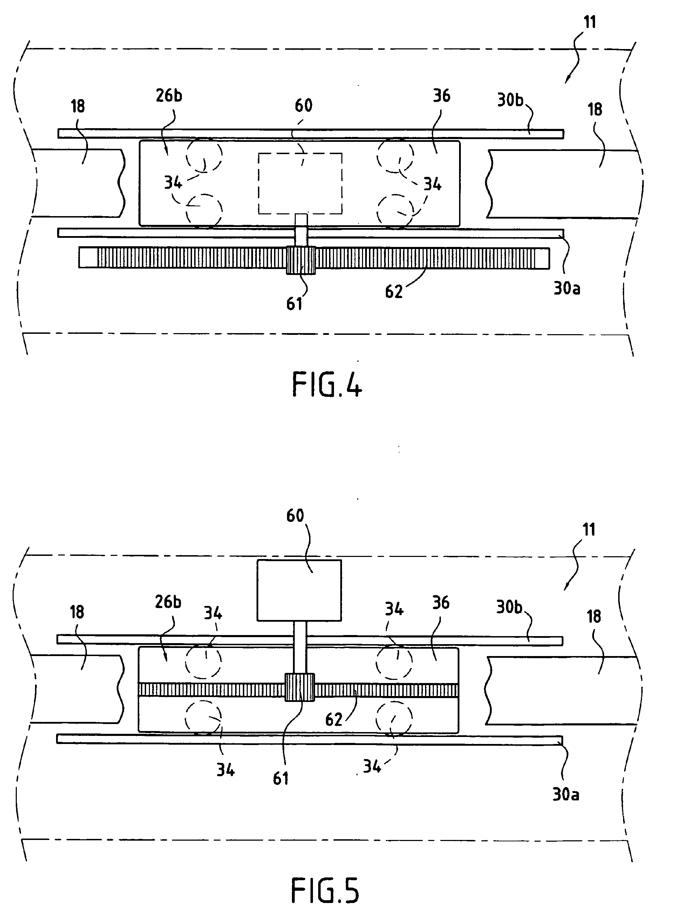

Selon des variantes schématiquement représentées aux figures 4 et 5, ladite unité motrice comporte un moteur électrique pas à pas 60 et des moyens d'engrènement à pignon 61 et crémaillère 62, agencés entre l'axe du moteur et l'une desdites parties intérieure ou extérieure, le corps dudit moteur étant porté par l'autre partie extérieure ou intérieure, respectivement. Ainsi, si l'on considère la figure 4, le moteur est porté par l'équipage mobile 26b tandis que la crémaillère 62 est solidaire de la surface supérieure du carter. Selon cet exemple non limitatif, l'axe du moteur s'étend parallèlement à l'axe X de la turbomachine, passe radialement à l'extérieur du rail et se termine par un pignon 61 qui engrène avec une crémaillère courbe 62 solidaire de la surface supérieure du carter et parallèle au rail.

Au contraire, l'exemple schématique de la figure 5 montre la structure inverse où le moteur 60 est porté par le carter 11 tandis que ladite crémaillère 62 est portée par l'équipage mobile 26b.

## Revendications

1. Etage d'aubes de redresseur à calage variable, comportant des aubes agencées dans un carter (11), lesdites aubes étant déplacées par un système de manoeuvre comprenant une couronne d'actionnement (18) extérieure audit carter et portée par celui-ci et ladite couronne étant liée par des biellettes (16) aux aubes dudit étage pour les actionner simultanément, ladite couronne d'actionnement (18) étant assujettie à se déplacer selon une simple rotation centrée sur l'axe de ladite turbomachine, ledit système de manoeuvre comporte deux parties coaxiales, une partie intérieure (24) solidaire du carter et une partie extérieure comportant ladite couronne d'actionnement (18), reliée auxdites biellettes et guidée en rotation autour de ladite partie intérieure et en ce qu'au moins une unité motrice électrique (40 ; 60, 61, 62) est agencée entre ces deux parties.

2. Etage d'aubes selon la revendication 1, dans lequel ladite partie intérieure comporte un rail annulaire fixe (24) faisant saillie à la surface externe dudit carter, coaxialement à celui-ci et en ce que ladite partie extérieure comporte, outre ladite couronne d'actionnement (18), au moins trois équipages mobiles (26a, 26b) espacés circonférentiellement et assujettis à se déplacer le long dudit rail, en ce que chaque équipage mobile est couplé à ladite couronne par un agencement de guidage radial (28) et en ce que ladite unité motrice est agencée entre l'un des équipages mobiles et ladite partie intérieure.

3. Etage d'aubes selon la revendication 2, dans lequel ladite unité motrice est un moteur électrique linéaire (40), structurellement partagé entre ladite partie intérieure et cet équipage mobile.

4. Etage d'aubes selon la revendication 2, dans lequel ladite unité motrice comporte un moteur électrique pas à pas (60) et des moyens d'engrènement à pignon et crémaillère (61, 62) agencés entre l'axe du moteur et l'une desdites parties intérieure ou extérieure, le corps dudit moteur étant porté par l'autre partie extérieure ou intérieure, respectivement.

5. Etage d'aubes selon la revendication 4, dans lequel ledit moteur (60) est porté par le carter (11) et en ce que ladite crémaillère est portée par ledit équipage mobile (26b).

6. Etage d'aubes selon la revendication 4, dans lequel ledit moteur (60) est porté par ledit équipage mobile (26b) et en ce que ladite crémaillère (62) est solidaire de la surface supérieure dudit carter.

7. Etage d'aubes selon la revendication 2, dans lequel ladite partie extérieure comporte au moins quatre équipages mobiles (26a, 26b) espacés circonférentiellement et en ce que deux unités motrices semblables (40) sont respectivement agencées entre deux équipages mobiles (26b) sensiblement diamétralement opposés, d'une part et ladite partie intérieure, d'autre part.

8. Etage d'aubes selon l'une des revendications 3 à 7, dans lequel pour chaque unité motrice, ladite couronne comporte un pontet de raccordement (45), en forme de secteur à rayon de courbure augmenté, conformé pour ménager un espace (48) abritant l'équipage mobile de ladite unité motrice correspondante.

9. Etage d'aubes selon la revendication 8, dans lequel ledit agencement de guidage radial (28) correspondant audit équipage mobile (26b) de ladite unité motrice est monté entre cet équipage mobile et le pontet de raccordement (45) voisin.

10. Compresseur muni d'au moins un étage d'aubes de redresseur à calage variable selon l'une des revendications précédentes.

11. Turbomachine comportant au moins un compresseur selon la revendication 10.

## Claims

1. A variable-pitch stator vane stage comprising vanes arranged in a casing (11), said vanes being moved by a drive system comprising an actuator ring (18) outside said casing and carried thereby, with said actuator ring being connected to the vanes of said stage by cranks (16) in order to actuate them simultaneously, said actuator ring (18) being constrained to move in rotation only, centered on the axis of said turbomachine, said drive system comprises two coaxial portions, an inner portion (24) secured to the casing and an outer portion including said actuator ring (18) that is connected to said cranks, and that is guided in rotation about said inner portion, and in that at least one electrical drive unit (40; 60, 61, 62) is arranged between the two portions.

2. A vane stage according to claim 1, in which said inner portion comprises a stationary annular rail (24) projecting from the outside surface of said casing, coaxially thereabout, and in that said outer portion comprises, in addition to said actuator ring (18), at least three moving equipments (26a, 26b) circumferentially spaced apart and constrained to move along said rail, in that each moving equipment is coupled to said actuator ring by a radial guide arrangement (28), and in that said drive unit is arranged between one of the moving equipments and said inner portion.

3. A vane stage according to claim 2, in which said drive unit is a linear electric motor (40) that is shared structurally between said inner portion and said moving equipment.

4. A vane stage according to claim 2, in which said drive unit comprises a stepper electric motor (60) and rack-and-pinion gear means (62, 61) arranged between the shaft of the motor and one of said inner or outer portions, the body of said motor being carried by the respective other outer or inner portion.

5. A vane stage according to claim 4, in which said motor (60) is carried by the casing (11) and in that said rack is carried by said moving equipment (26b).

6. A vane stage according to claim 4, in which said motor (60) is carried by said moving equipment (26b) and in that said rack (62) is secured to the outside surface of said casing.

7. A vane stage according to claim 2, in which said outer portion comprises at least four moving equipments (26a, 26b) that are circumferentially spaced apart, and in that two similar drive units (40) are engaged between said inner portion and two respective substantially diametrically opposite moving equipments (26b).

8. A vane stage according to one of claims 3 to 7, in which for each drive unit, said actuator ring includes a connection bridge (45) in the form of a sector of increased radius of curvature, shaped to leave a space (48) housing the moving equipment of said corresponding drive unit.

9. A vane stage according to claim 8, in which said radial guide arrangement (28) corresponding to said moving equipment (26b) of said drive unit is mounted between said moving equipment and the adjacent connection bridge (45).

10. A compressor provided with at least one variable-pitch stator vane stage according to any preceding claim.

11. A turbomachine including at least one compressor according to claim 10.

## Patentansprüche

1. Leitschaufelstufe mit variabler Einstellung mit in einem Gehäuse (11) angeordneten Schaufeln, wobei die Schaufeln durch ein Betätigungssystem bewegt werden, das einen außerhalb des Gehäuses gelegenen und von diesem getragenen Betätigungsring (18) umfaßt, und wobei der Ring durch Schwingarme (16) mit den Schaufeln der Stufe verbunden ist, um sie gleichzeitig zu betätigen, wobei der Betätigungsring (18) gezwungen ist, sich in einer um die Achse der Turbomaschine zentrierten einfachen Drehung zu bewegen, wobei das Betätigungssystem zwei koaxiale Teile umfaßt, einen inneren Teil (24), der mit dem Gehäuse fest verbunden ist, und einen den Betätigungsring (18) umfassenden äußeren Teil, der mit den Schwingarmen verbunden und um den inneren Teil herum drehgeführt ist, und wobei wenigstens eine elektrische Antriebseinheit (40; 60, 61, 62) zwischen diesen zwei Teilen angeordnet ist.

2. Schaufelstufe nach Anspruch 1, bei der der innere Teil eine feste ringförmige Schiene (24) umfaßt, die an der Außenseite des Gehäuses koaxial zu diesem vorspringt, und der äußere Teil außer dem Betätigungsring (18) wenigstens drei bewegliche Organe (26a, 26b) umfaßt, die in Umfangsrichtung voneinander beabstandet und gezwungen sind, sich entlang der Schiene zu bewegen, bei der jedes bewegliche Organ durch eine Radialführungsanordnung (28) mit dem Ring gekoppelt ist und die Antriebseinheit zwischen einem der beweglichen Organe und dem inneren Teil angeordnet ist.

3. Schaufelstufe nach Anspruch 2, bei der die Antriebseinheit ein Linearmotor (40) ist, der strukturell auf den inneren Teil und dieses bewegliche Organ verteilt ist.

4. Schaufelstufe nach Anspruch 2, bei der die Antriebseinheit einen Schrittschaltmotor (60) und Eingriffsmittel mit Ritzel und Zahnstange (61, 62) umfaßt, die zwischen der Achse des Motors und einem der inneren oder äußeren Teile angeordnet sind, wobei der Körper des Motors von dem anderen äußeren bzw. inneren Teil getragen wird.

5. Schaufelstufe nach Anspruch 4, bei welcher der Motor (60) von dem Gehäuse (11) getragen und die Zahnstange von dem beweglichen Organ (26b) getragen wird.

6. Schaufelstufe nach Anspruch 4, bei welcher der Motor (60) von dem beweglichen Organ (26b) getragen wird und die Zahnstange (62) mit der Oberseite des Gehäuses fest verbunden ist.

7. Schaufelstufe nach Anspruch 2, bei welcher der äußere Teil wenigstens vier in Umfangsrichtung voneinander beabstandete bewegliche Organe (26a, 26b) umfaßt und bei der zwei ähnliche Antriebseinheiten (40) jeweils zwischen zwei im wesentlichen diametral gegenüberliegenden beweglichen Organen (26b) einerseits und dem inneren Teil andererseits angeordnet sind.

8. Schaufelstufe nach einem der Ansprüche 3 bis 7, bei welcher der Ring für jede Antriebseinheit eine sektorförmige Verbindungsbrücke (45) mit erhöhtem Krümmungsradius umfaßt, die entsprechend ausgebildet ist, um einen Raum (48) auszusparen, in dem das bewegliche Organ der entsprechenden Antriebseinheit untergebracht ist.

9. Schaufelstufe nach Anspruch 8, bei der die Radialführungsanordnung (28), die dem beweglichen Organ (26b) der Antriebseinheit entspricht, zwischen diesem beweglichen Organ und der benachbarten Verbindungsbrücke (45) angebracht ist.

10. Verdichter, der mit wenigstens einer Leitschaufelstufe mit variabler Einstellung nach einem der vorhergehenden Ansprüche ausgestattet ist.

11. Turbomaschine, die wenigstens einen Verdichter nach Anspruch 10 umfaßt.
